# EUROPÄISCHE PATENTSCHRIFT

(11) **EP 2 519 417 B1**
(45) Veröffentlichungstag und Bekanntmachung des Hinweises auf die Patenterteilung: **08.10.2014**
(21) Anmeldenummer: 10805214.3
(22) Anmeldetag: 29.12.2010
(51) Int. Cl.: B60K 7/00, B60K 17/04

(54) **ANFAHRHILFSSYSTEM, SOWIE KOMPONENTEN DESSELBEN**
HELPING SYSTEM FOR STARTING AND COMPONENTS THEREOF
SYSTÈME D'AIDE AU DÉMARRAGE ET COMPOSANTS DE CELUI-CI

(30) Priorität: 17.11.2010 DE 102010051466; 29.12.2009 DE 102009060712
(43) Veröffentlichungstag der Anmeldung: 07.11.2012
(73) Patentinhaber: Brettmeister, Josef, 86556 Kühbach (DE)
(72) Erfinder: Brettmeister, Josef, 86556 Kühbach (DE)
(74) Vertreter: Beck & Rössig European Patent Attorneys
(86) Internationale Anmeldenummer: PCT/EP2010/007963
(87) Internationale Veröffentlichungsnummer: WO 2011/079947

(56) Entgegenhaltungen:
- CH-A5- 697 030
- DE-A1- 2 711 214
- FR-A1- 2 675 439
- FR-A1- 2 689 459
- US-A- 3 265 147
- US-A- 4 352 406

## Beschreibung

Die Erfindung betrifft ein Anfahrhilfssystem für ein Kraftfahrzeug. Insbesondere betrifft die Erfindung ein Anfahrhilfssystem das als solches dazu dient, ein in einem Fahrzeugstandardbetrieb ungetrieben mitlaufendes und nicht an einen Fahrzeugantriebsstrang angekoppeltes Rad eines Achssystems eines Fahrzeuges, insbesondere Gespannes, temporär zu anzutreiben und damit über dieses primär nicht angetriebene Rad kurzzeitig und unter lediglich geringer Drehzahl einen Traktionsbeitrag zu leisten. Die Erfindung betrifft dabei insbesondere ein Anfahrhilfssystem das dazu dient, bei Fahrzeugen und Gespannen mit als nicht-angetrieben zu bezeichnenden Achsen das Anfahren zu erleichtern, wenn über die für den Normalbetrieb vorgesehenen Fahrzeugantriebsachsen mangels hinreichender Traktion keine für das Anfahren des Fahrzeuges ausreichende Zugkraft generiert werden kann.

Bei dem Betrieb von Lastkraftfahrzeugen die im Grunde für den Betrieb auf ordentlichen Fahrbahnen ausgelegt sind und über keinen sog. Allradantrieb verfügen, können beim Betrieb derselben auf rolligen Fahrbahnoberflächen, die z.B. aus Kies oder Sand bestehen, Traktionseinbußen auftreten die ggf. dazu führen, dass das Fahrzeug nicht mehr durch die an der Hauptantriebsachse herrschende Resttraktion an- oder weiterfahren kann.

Das gattungsbildende Dokument CH 697030 beschreibt ein Anfahrhilfssystem bsw. einen Auflieger nach den Oberbegriff des Anspruchs 1 bzw. 12.

Diese Traktionseinbußen können insbesondere auch beim Abladen von Schüttgütern von der Ladefläche von Aufliegern und Anhängern auftreten. Wird beispielsweise beim Abkippen von Schüttgütern die Ladefläche nach hinten schräg angestellt, damit hierbei das Schüttgut von selbst von der Ladefläche abrutscht, so kann der Fall eintreten, dass der Anhänger im rückwärtigen Teil durch das Schüttgut zugeschüttet wird und nicht mehr rangierfähig ist. Um diesem Problem vorzubeugen wird in der Praxis das Fahrzeug während des Abkippens des Schüttguts sukzessive vorwärts bewegt, so dass es zu keiner unzulässig großen Häufung von Schüttgut im Bereich der hinteren Radachsen des Fahrzeuges kommt. Bei diesem Abladekonzept ergeben sich jedoch erheblich gestreckte Schüttgutkegel die relativ viel Platz verbrauchen. Weiterhin besteht beim Abkippen von Schüttgut das Problem, dass sich während des Schrägstellens der Anhängerladefläche der Gesamtschwerpunkt des aus Zugmaschine und Anhänger bestehenden Systems nach hinten in den Bereich der Hängerachsen verschiebt. Dies kann dazu führen, dass die hintere Antriebsachse der Zugmaschine stark entlastet wird, ggf. sogar vom Boden abhebt. In diesem Zustand ist keine Zugkraft auf den Anhänger mehr aktivierbar, da sich die Antriebsräder der Zugmaschine traktionsfrei durchdrehen. In dieser Situation muss der Entladevorgang unterbrochen und die Ladefläche zurückgeschwenkt werden, da ansonsten der hintere Bereich des Gespannes verschüttet wird. Um derartige Komplikationen zu vermeiden, ist seitens des Fahrers große Erfahrung und Aufmerksamkeit erforderlich. Wird das Fahrzeug während des Abladens zu rasch bewegt, ergeben sich zu lang gestreckte Schüttguthaufen, wird das Fahrzeug zu langsam bewegt, oder rutscht das Schüttgut unerwartet in großer Menge ab, wird die Hinterachse verschüttet und die Ladewanne muss zunächst zurückgeschwenkt, und die Hinterachse ggf. freigeschaufelt werden. Die erforderliche Aufmerksamkeit und die durch ggf. mehrfaches Zurückkippen der Ladefläche verursachten Unterbrechungen des Entladevorgangs erweisen sich als zeitraubend. Um diese Abladeprobleme zu vermeiden ist es grundsätzlich möglich, für den Schüttguttransport oder für Fahrten in schlecht erschlossene Anlieferzonen Allradfahrzeuge einzusetzen. Zugmaschinen mit Allradantrieb sind jedoch sowohl in der Anschaffung, als auch im Betrieb und Unterhalt deutlich teuerer als Fahrzeuge die für den Betrieb auf ebenen Fahrbahnen ausgelegt sind. Auch die nachträgliche Umrüstung von Fahrzeugen auf einen über den Hauptanriebsstrang bewerkstelligten Allradantrieb, ist im Regelfall aufgrund der hohen technischen Komplexität betriebswirtschaftlich nicht sinnvoll.

Der Erfindung liegt die Aufgabe zugrunde, Lösungen zu schaffen die das Anfahren von Fahrzeugen ohne Allradantrieb oder das Anfahren von Zugmaschinen mit Aufliegeranhängern oder mit Zweiachsanhängern erleichtern, insbesondere wenn diese mit Kippeinrichtungen ausgestattet sind.

Diese Aufgabe wird gemäß einem ersten Aspekt der vorliegenden Erfindung gelöst durch ein Anfahrhilfssystem zum temporären Antreibens eines über ein Achssystem aufgehängten und nicht mit einem Fahrzeugantriebsstrang getrieblich gekoppelten Fahrzeugrades, mit:
- einer radseitig angebundenen Kranzeinrichtung,
- einer achsseitig angebundenen Hilfsantriebseinrichtung die ein Ritzel umfasst das mit der Kranzeinrichtung in Eingriff bringbar ist, und
- einer Einrückeinrichtung zum temporären Einrücken der Hilfsantriebseinrichtung in die radseitig angebundene Kranzeinrichtung,
- wobei das Anfahrhilfssystem eine Freilaufmechanik umfasst, die einen Freilaufzustand einnimmt, wenn die Kranzeinrichtung schneller dreht als durch das Ritzel veranlasst.

Dadurch wird es auf vorteilhafte Weise möglich, über eine primär nicht angetriebene Fahrzeugachse in Sonderbetriebszuständen einen Traktionsbeitrag zu leisten, wobei durch die Hilfsantriebseinrichtung die Eigendrehung des Rades nicht behindert wird, sobald beispielsweise das Hauptantriebssystem des Fahrzeuges nach Freikommen des Aufliegers wieder ausreichenden Vortrieb verschafft. Das erfindungsgemäße Hilfsantriebssystem wird damit nur für den kurzen Zeitraum des Anfahrens eingesetzt und ermöglicht an dem ansonsten nicht angetriebenen Rad in Sonderbetriebszuständen z.B. in schlecht erschlossenem Gelände die Realisierung eines Traktionsbeitrags. Die Eigendrehung des Rades in Fahrtrichtung wird durch die Hilfsantriebseinrichtung nicht behindert.

Gemäß einer besonders bevorzugten Ausführungsform der Erfindung ist die Freilaufmechanik im Zusammenspiel mit der Einrückeinrichtung gebildet. Die Freilaufmechanik kann dabei insbesondere durch die Einrückeinrichtung die Kranzeinrichtung und das Ritzel gebildet sein. Die Freilaufmechanik ist hierbei vorzugsweise derart gestaltet, dass zur Erlangung des Freilaufzustands das Ritzel aus dem Eingriffszustand mit der Kranzeinrichtung ausrückt.

Die Einrückeinrichtung ist gemäß einer besonders bevorzugten Ausführungsform der Erfindung derart ausgebildet, dass im Rahmen des Betriebs der Hilfsantriebseinrichtung die zwischen dem Ritzel und der Kranzeinrichtung wirkenden Reaktionskräfte den Eingriffszustand zwischen Ritzel und Kranzeinrichtung unterstützten.

Die Einrückeinrichtung ist vorzugsweise derart aufgebaut, dass diese eine Lenkereinrichtung umfasst, und dass über diese Lenkereinrichtung das Ritzel derart entlang einer Bogenbahn bewegbar gelagert ist, das dieses durch Schwenken der Lenkereinrichtung mit der Kranzeinrichtung in Eingriff bringbar ist. Die Lenkereinrichtung ist hierbei vorzugsweise mit einem Aktuator gekoppelt und nach Maßgabe des Aktuators in die Eingriffsposition oder eine Passivposition verlagerbar. Dieser Aktuator ist vorzugsweise so gestaltet, dass dieser die Lenkereinrichtung nachgiebig unterstützt. Hierdurch wird es möglich, die Lenkereinrichtung durch die im Überholbetrieb des Rades am Ritzel angreifenden Reaktionskräfte in eine Schwenkstellung zu schwenken in welcher die radseitige Kranzeinrichtung das Ritzel überholen kann. Der Aktuator kann eine Federeinrichtung umfassen, oder eine anderweitige elastische oder nachgiebige Struktur umfassen die es erlaubt, bei Überwindung der zunächst durch den Aktuator aufgebrachten Stellkraft die Lenkereinrichtung wieder in ihre Ausgangs, oder zumindest eine Überlaufstellung zurückzuschwenken. Falls der Überholvorgang der Kranzeinrichtung nur kurzzeitig eintritt, kann durch die Aktuatoreinrichtung der Eingriffszustand wieder selbsttätig herbeigeführt werden, indem die Aktuatoreinrichtung den Lenker elastisch unterstützt wieder in seine Arbeitsstellung schwenkt und dabei das Ritzel mit der Kranzeinrichtung in Eingriff bringt.

Die Aktuatoreinrichtung kann insbesondere als pneumatische Zylinder- oder Balgeinrichtung ausgeführt sein, oder neben einem hydraulischen Stellglied noch Federorgane umfassen. Die Ansteuerung der Aktuatoreinrichtung kann dabei über eine vorzugsweise elektrisch angesteuerte Ventileinrichtung erfolgen. Bei einem ungetriebenen Auflieger, oder Hänger mit einem pneumatischen Bremssystem kann die zur Betätigung der Aktuatoreinrichtung vorgesehen Druckluft aus dem Bremssystem abgezweigt werden. Hierdurch kann auf einfache Weise sichergestellt werden, dass das Hilfsantriebssystem nicht bei aktivierten Bremsen in Betrieb genommen wird.

Die Kranzeinrichtung ist vorzugsweise als Zahnkranz mit radial einwärts zur Radachse weisenden Zähnen ausgebildet. Die Kranzeinrichtung ist vorzugsweise mit der Felge des entsprechenden Rades verschweißt. Die Kranzeinrichtung kann aus mehreren Kranzsegmenten zusammengesetzt sein. Vorzugsweise sind hierbei die Stoßstellen zwischen den Kranzsegmenten verschweißt. Die Schweißverbindung der Kranzeinrichtung kann auf mehrere kurze Umfangsabschnitte beschränkt sein. Bei einem segmentierten Aufbau der Kranzeinrichtung befinden sich die Schweißstellen vorzugsweise im Bereich der Stoßstellen der Segmente, so dass es keine ungebundenen Endabschnitte jener Segmente gibt. Die Zahngeometrie der Kranzeinrichtung ist vorzugsweise so gestaltet, dass etwaige an der Kranzeinrichtung oder dem Ritzel anhaftende Verunreinigungen abgequetscht werden können ohne dass der Eingriff von Ritzel und Kranzeinrichtung erheblich beeinträchtigt wird. Am Ritzel, oder an der Lenkereinrichtung können Führungsstrukturen vorgesehen sein, die bereits vor Eintritt des Verzahnungseingriffs des Ritzels in die Kranzeinrichtung eine gewisse Vorpositionierung, insbesondere in Richtung der Umlaufachse der Kranzeinrichtung, d.h. quer zur Umlaufebene der Kranzeinrichtung, bewirken. Vorzugsweise umfasst die Einrückeinrichtung Einstellstrukturen durch welche die Bewegungsbahn des Ritzels im Rahmen des Einbaus des Systems, oder der Wartung desselben, z.B. auch nach einem Radwechsel hinreichend exakt auf die Position der Kranzeinrichtung einstellbar ist. An der Kranzeinrichtung können weiterhin auch Ringbahnstrukturen ausgebildet sein, durch welche die Eintauchtiefe des Ritzels in die Verzahnung der Kranzeinrichtung begrenzt und ggf. weitere vorteilhafte Führungs- und Positionierungseffekte realisiert werden.

Das Ritzel ist vorzugsweise derart gestaltet, dass dieses bezüglich der Axialposition von Ritzel und Kranzeinrichtung relativ große Toleranzen zulässt. Das Ritzel kann hierzu z.B. im Bereich seiner Verzahnung eine Axiallänge aufweisen die etwa doppelt so groß ist wie die ebenfalls in Axialrichtung des Ritzels gemessene Breite der zwischen Ritzel und Kranzeinrichtung tatsächlich bestehenden Eingriffszone. Die seitens der Kranzeinrichtung und des Ritzels realisierten Zahngeometrien müssen keine kinematisch besonders hochwertigen Zahngeometrien darstellen. Vorzugsweise sind diese Geometrien so gewählt, dass diese fertigungstechnisch günstig realisierbar sind und relativ große Form und Maßtoleranzen für Ritzel und Kranz erlauben und hinreichend verschmutzungsunempfndlich sind. Da die Antriebsunterstützung mit äußerst geringen Radgeschwindigkeiten erfolgt kann die Verzahnungsgeometrie vorzugsweise primär auf Festigkeit und nur untergeordnet auf Gleichlauf ausgelegt werden. Soweit die Kranzeinrichtung als in die entsprechende Felge eingeschweißte Struktur realisiert wird, ist es möglich, Die Kranzeinrichtung zunächst durch Einschweißen eines Ringes zu fertigen und die Verzahnungsgeometrie durch eine entsprechend gesteuerte Schneideinrichtung, insbesondere Laserschneideinrichtung nach Einschweißen des Ringes in diesen einzuschneiden. Die Kranzeinrichtung wird vorzugsweise im Bereich einer dem Felgenschraubflansch axial gegenüberliegenden Felgeninnenkante angeschweißt, so dass diese beispielsweise eine radial einwärts gerichtete Verlängerung des Felgenhorns darstellt. Der Innendurchmesser der Kranzeinrichtung ist vorzugsweise so gewählt, dass die entsprechend ausgestattete Felge noch mit großem Spiel über die Bremstrommel- oder Bremsscheibeneinrichtung einer zugeordneten Radaufhängung überschoben werden kann, so dass der Radwechsel in der gleichen Weise abgewickelt werden kann wie mit konventionellen Felgen.

Alternativ zu der Ausführung der Kranzeinrichtung als Zahnradring ist es auch möglich, die Kranzeinrichtung als Stiftkranz auszuführen. Diese Bauform zeichnet sich durch eine hohe Belastbarkeit und Schmutzunempfindlichkeit aus. Etwaige der Kranzeinrichtung anhaftende Verunreinigungen können durch das zugeordnete Ritzel durch die Gitteröffnungen des Stiftkranzes abgedrängt werden.

Für die Realisierung eines Antriebshilfssystems für einen LkW-Auflieger werden durch Ritzel und Kranzeinrichtung vorzugsweise Übersetzungsverhältnisse im Bereich von 4:1 bis 6:1, insbesondere von 5:1 realisiert. Für den Einsatz des Hilfsantriebssystems bei Sattelzugaufliegern kann das Hilfsantriebssystem derart dimensioniert werden, dass dieses je zugeordnetem Rad Antriebsdrehmomente im Bereich von 12 - 25 kNm bereitstellt.

Das Hilfsantriebssystem kann so gestaltet sein, dass durch dieses beide Räder einer Achse mit einem Hilfsantriebsdrehmoment beaufschlagt werden. Das Hilfsantriebssystem kann dabei für diese Achse einen einzigen Getriebemotor umfassen über welchen beide Räder angetrieben werden. Die erfindungsgemäße Freilaufeinrichtung bietet bei einem derartigen Gesamtachsantrieb eine Differentialwirkung, da ggf. ein aufgrund der Gesamtbewegung des Fahrzeugs temporär rascher drehendes Rad den Hilfsantrieb auf der entsprechenden Seite überholen kann. Es ist auch möglich, das Hilfsantriebssystem so zu gestalten, dass dieses für jedes Rad der Achse einen eigenen Antriebsmotor umfasst. Als Antriebsmotor wird vorzugsweise ein hydrostatischer Antriebsmotor eingesetzt der beispielsweise durch ein seitens der Zugmaschine vorgesehenes Hydrauliksystem mit Drucköl versorgt wird. Die Koppelung des Ritzels mit dem zugeordneten Antriebsmotor erfolgt vorzugsweise über eine Gelenkwelleneinrichtung die als solche die radiale Positionsverlagerung zwischen dem Ritzel und dem Antriebsmotor ermöglicht. Es ist auch möglich, den Antriebsmotor schwenkbewegbar zu lagern, so dass dieser gemeinsam mit dem Ritzel geschwenkt werden kann. Bei dieser Variante können das Ritzel und der Antriebsmotor, bzw. ein ggf. zwischengeschaltetes Getriebe auch durch eine starre Welle miteinander verbunden werden.

Gemäß einem besonderen Aspekt der vorliegenden Erfindung erfolgt die Ansteuerung des Hilfsantriebssystems unter Einschluss einer elektronischen Steuereinrichtung. Diese elektronische Steuereinrichtung ist vorzugsweise so gestaltet, dass diese eine Sensoreinrichtung einschließt zur Erfassung hinsichtlich der Raddrehung indikativer Signale, wobei diese Signale durch die elektronische Steuereinrichtung verarbeitet werden, und das Hilfsdrehmoment in Abhängigkeit von der erfassten Raddrehung abgestimmt wird.

Das Hilfsdrehmoment wird wie bereits ausgeführt, vorzugsweise durch einen Hydraulikmotor generiert. Vorzugsweise erfolgt die Einstellung des Hilfsdrehmomentes über die elektronische Steuereinrichtung beispielsweise durch entsprechende Ansteuerung der für den Fluiddruck, oder den Fluidstrom über den Hydraulikmotor maßgeblichen Ventile oder Steuerorgane.

Weiterhin ist es möglich, die elektronische Steuereinrichtung so zu gestalten, dass diese eine Aufzeichnungseinrichtung umfasst, zur Aufzeichnung von hinsichtlich des Einsatzes des Hilfsantriebssystems indikativen Informationen. Anhand dieser Informationen kann beispielsweise im Rahmen einer Fahrzeugwartung die Einsatzhäufigkeit, Einsatzdauer und die Systembelastung festgestellt werden. Anhand dieser Aufzeichnungen kann dann wiederum beurteilt werden, ob das Hilfsantriebssystem ordnungsgemäß genutzt, oder über eine gewährleistete Einssatzdauer hinweg genutzt wurde. Über die Steuereinrichtung können dabei insbesondere das Antriebsdrehmoment (oder verwandte Größen wie beispielsweise der Hydrauliköldruck) und der Raddrehwinkel, sowie auch Zeitangaben erfasst werden.

Das erfindungsgemäße Anfahrhilfssystem kann insbesondere in einen anderweitig nicht mit angetriebenen Achsen ausgestatteten Auflieger für eine Sattelzugmaschine integriert werden. Die Erfindung richtet sich damit insbesondere auch auf einen Auflieger an sich, für ein Sattelschleppfahrzeug mit einem Radaufhängungssystem das wenigstens eine Radachse umfasst die in einem hinteren Bereich des Sattelschleppfahrzeuges angeordnet ist, wobei die Radachse einen Achsträger umfasst der sich quer zur Längsrichtung des Aufliegers erstreckt und beidseitig gefedert abgestützt ist, wobei der Achsträger im Bereich seiner beiden Enden jeweils eine Radlagerung trägt auf welcher jeweils eine Radfelge sitzt, wobei jene Radfelge mit einer Kranzeinrichtung versehen ist die eine Eingriffsgeometrie für eine Hilfsantriebseinrichtung bildet, und wobei an den Achsträger eine Hilfsantriebseinrichtung angebunden ist die schaltbar mit der Kranzeinrichtung in Eingriff bringbar ist.

Diese Hilfsantriebseinrichtung umfasst wie bereits angegeben, ein Ritzel, das mit der Kranzeinrichtung in Eingriff bringbar ist. Weiterhin umfasst die Hilfsantriebseinrichtung vorzugsweise einen Lenker der schwenkbewegbar gelagert ist, und eine Ritzellagerung trägt, wobei durch Schwenken des Lenkers das Ritzel in eine Eingriffsposition schwenkbar ist in welche das Ritzel mit der Kranzeinrichtung in Eingriff steht.

Die Hilfsantriebseinrichtung ist derart gestaltet, dass der Eingriffszustand zwischen Ritzel und Kranzeinrichtung durch die am Ritzel angreifenden Reaktionskräfte unterstützt wird. Weiterhin ist die Hilfsantriebseinrichtung derart gestaltet, dass dann, wenn das momentan mit Hilfskraft in Drehung versetzte Rad aufgrund der Gesamtbewegung des Aufliegers letztlich schneller dreht als durch das Ritzel veranlasst, der Eingriffszustand selbsttätig aufgehoben wird.

Das erfindungsgemäße Hilfsantriebssystem dient der Bereitstellung eines Hilfsantriebs für Ausnahmesituationen in welchen eine Eigendrehung von Rädern vorteilhaft ist die im Normalbetrieb ohne eigenen Antrieb betrieben werden. Es ist für lediglich geringe Geschwindigkeiten und eher kurze Betriebszeiten ausgelegt. Es eignet sich insbesondere für Fahrzeuge die in ihrer Bauart für den Betrieb auf tragfähigen Fahrbahnen und große Laufleistungen ausgelegt sind und nur selten, auf Untergrund mit geringer Traktion oder unter anderweitigen Sonderumständen, z.B. in schlecht erschlossenem Gelände betrieben werden und hierbei an den normal angetriebenen Achsen nur geringe Traktion besteht.

Weitere Einzelheiten und Merkmale der Erfindung ergeben sich aus der nachfolgenden Beschreibung in Verbindung mit der Zeichnung. Es zeigt:
- Figur 1: eine Schemadarstellung zur Veranschaulichung eines aus Sattelzugmaschine und Auflieger gebildeten Sattelzuggespanns in beladenem Zustand; bei welchem das erfindungsgemäße Hilfsantriebssystem vorteilhaft einsetzbar ist;
- Figur 2: eine Schemadarstellung zur Veranschaulichung des Sattelzuggespanns nach Figur 1 in einem Zustand in welchem über das erfindungsgemäße Hilfsantriebssystem der Auflieger verfahren werden kann, selbst wenn über die Antriebsachsen der Sattelzugmaschine keine hinreichende Traktion realisierbar ist;
- Figur 3: eine perspektivische Skizze zur Veranschaulichung einer ersten Variante der radnahen Komponenten des erfindungsgemäßen Hilfsantriebssystems;
- Figur 4: eine Funktionsskizze zur Veranschaulichung des Systems nach Figur 3 in einer Eingriffsstellung in welcher über das eingerückte Ritzel eine Radantriebsunterstützung erfolgt;
- Figur 5: eine Funktionsskizze zur Veranschaulichung des Systems nach Figur 4 in einer Passivstellung in welcher keine Radantriebsunterstützung erfolgt;
- Figur 6a: eine Funktionsskizze zur Veranschaulichung einer zweiten Variante des erfindungsgemäßen Systems in welcher ähnlich wie bei dem Systemzustand nach Figur 5 über das eingerückte Ritzel eine Radantriebsunterstützung erfolgt, wobei jedoch der das Ritzel führende Lenker über eine elastische Stelleinrichtung nachgiebig abgestützt ist;
- Figur 6b: eine Funktionsskizze zur Veranschaulichung der zweiten Variante nach Figur 6a in einem Zustand mit einem durch die Ritzelreaktionskräfte niedergedrückten Lenker und damit ausgerücktem Ritzel, wobei in diesem Zustand das mit der Kranzeinrichtung gekoppelte Rad das Ritzel überholen kann;
- Figuren 7a, 7b und 7c: Skizzen zur Veranschaulichung mehrerer Varianten der Kranzeinrichtung;
- Figur 8: eine Skizze zur Veranschaulichung einer Felge die mit einer aus mehreren Segmenten gebildeten und partiell an die Felge angeschweißten Kranzeinrichtung versehen ist;
- Figur 9: eine Skizze zur Veranschaulichung des Aufbaus eines mit einem erfindungsgemäßen Hilfsantriebssystem ausgestatteten Sattelzugaufliegers;
- Figur 10: eine perspektivische Skizze zur Veranschaulichung einer weiteren Ausführungsform eines erfindungsgemäßen Radhilfsantriebs mit elastischer Abstützung des Einrücklenkers.
- Figur 11: eine Skizze zur Veranschaulichung weiterer Einzelheiten einer erfindungsgemäßen Anfahrhilfe.

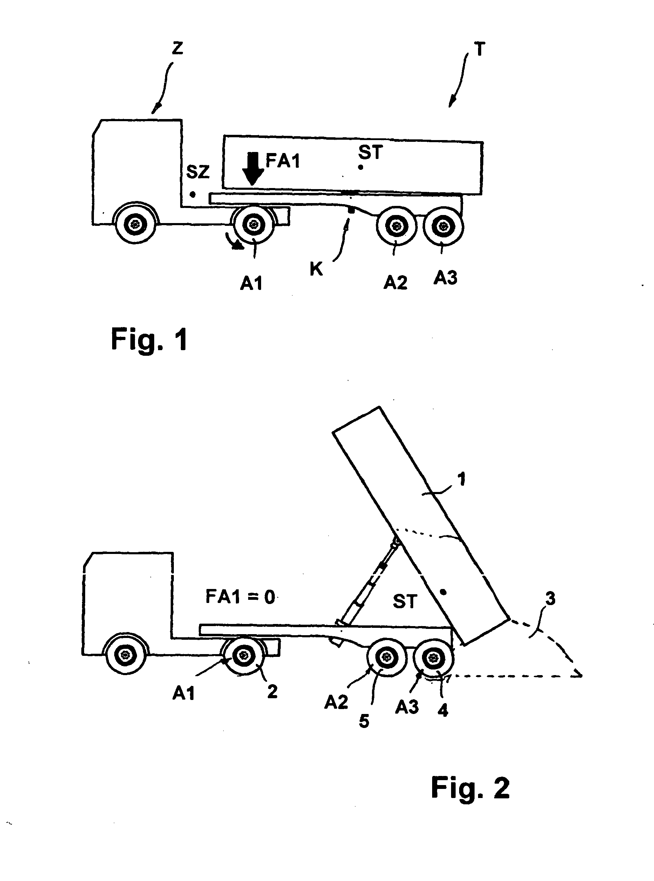

Figur 1 zeigt eine Zugmaschine Z mit einem Aufliegeranhänger T. Der Aufliegeranhänger T ist mit einer Kippeinrichtung K ausgestattet. Der hier gezeigte Zustand des Gespanns entspricht der Fahrstellung. Die Zugmaschine Z umfasst eine Hauptantriebsachse Aldie mit einem Differentialgetriebe ausgestattet ist und für den Regelbetrieb des Fahrzeuges ausgelegt ist. Bedingt durch die Lage des Schwerpunkts SZ der Zugmaschine Z und des Schwerpunkts ST des beladenen Aufliegeranhängers T ergeben sich an der Hauptantriebsachse A1 hohe Radaufstandskräfte und damit auf ebenem, griffigen Grund eine hohe Traktionswirkung. Bei einem derartigen Gespann sind die Achsen A2 und A3 des Aufliegeranhängers T typischerweise nicht mit dem Antriebsstrang der Zugmaschine Z gekoppelt und fungieren bei Betrieb auf ebener Fahrbahn als lediglich gezogene Achsen die keinen Traktionsbeitrag in Fahrtrichtung leisten.

Figur 2 zeigt das Gespann nach Figur 1 in einer Arbeitsstellung, bei der die Ladewanne 1 zur Entleerung schräg gestellt ist. Bei dieser Arbeitsstellung verschiebt sich der Schwerpunkt ST des Anhängersystems in Richtung der hinteren Radachsen A2, A3. Dies hat zur Folge, dass auf den Antriebsrädern 2 der Hauptantriebsachse A1 der Zugmaschine Z nur mehr eine geringe Auflast vorhanden ist. Dies führt dazu, dass sich die Antriebsräder 2 durchdrehen, ohne dass eine Horizontalkraft auf den Anhänger T aufgebracht werden kann. Der Anhänger T kann so nicht horizontal bewegt werden, weil die Räder 2 der Zugmaschine Z durchdrehen. Wird in diesem Zustand der Abladevorgang fortgesetzt, so kann der Fall eintreten, dass die hintere Hängerachse A3 durch das Schüttgut 3 verschüttet wird. Soweit der Auflieger T mit dem nachfolgend noch näher beschriebenen Anfahrhilfssystem ausgestattet ist, ist es möglich, den Auflieger T selbst in dem hier gezeigten Zustand nach vorne zu verfahren indem über die hintere Achse A3 und ggf. auch über die hintere Achse A2 eine Vortriebskraft durch temporären Hilfsantrieb der Räder 4, 5 generiert wird.

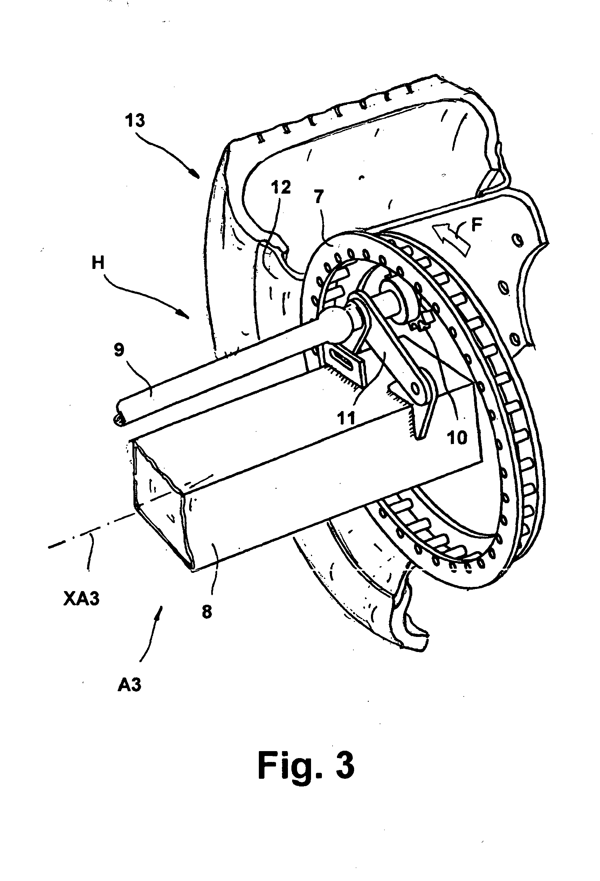

Figur 3 zeigt ein erstes Ausführungsbeispiel der radnahen Komponenten eines erfindungsgemäßen Anfahrhilfssystems H, hier konkret für eine nicht anderweitig angetriebene Hinterachse A3 eines Anhängers. Das erfindungsgemäße Anfahrhilfssystem H ermöglicht eine zeitlich begrenzte Einleitung einer zusätzlichen Drehkraft F auf das hier angedeutet dargestellte Hinterrad des Anhängers T (vgl. hierzu Figuren 1 und 2).

Durch den erfindungsgemäßen Hilfsantrieb wird eine Anfahrhilfe für die Zugmaschine, den Anhänger oder den Aufliegeranhänger geschaffen, indem an mindestens einem im Regelbetrieb nicht angetriebenen Rad 13 eine Hilfsantriebskraft bereitgestellt wird. Bei der erfindungsgemäßen Anfahrhilfe ist an der Radfelge 12 auf einer zur Radachse XA3 konzentrischen Kreislinie eine Kranzeinrichtung 7 vorgesehen. An dem Achskörper 8 ist eine Antriebseinrichtung H vorgesehen, die selektiv und nur für die Dauer eines Sonderbetriebszustandes, mit der Kranzeinrichtung 7 in Eingriff gebracht wird.

Die Antriebsvorrichtung H umfasst hier eine Antriebswelle 9 an welcher ein als Antriebskopf fungierendes Ritzel 10 angebracht ist. Das Ritzel 10 bildet eine zur Kranzeinrichtung passende Gegengeometrie zur Einleitung einer Antriebskraft F in die Kranzeinrichtung 7. Das Ritzel 10 ist an einem Lenker 11 schwenkbewegbar gelagert und über diesen aus einer Passivstellung in welcher kein Eingriff mit der Kranzeinrichtung 7 vorliegt, in die hier gezeigte Eingriffsposition verfahrbar.

Die an der Felge 12 des primär nicht angetriebenen Rades 11 vorgesehene Kranzeinrichtung 7 bildet eine zur Geometrie des Antriebskopfes, bzw. Ritzels 10 passende Gegengeometrie. Die hier gezeigte Kranzeinrichtung 7 ist als Stiftkranz ausgebildet der in seiner Funktion einem Zahnkranz entspricht.

In Nachbarschaft zu der Kranzeinrichtung 7 befindet sich die Antriebswelle 9, an deren Ende das bereits genannte als Antriebskopf fungierende Ritzel 10 befestigt ist. Dieser Antriebskopf ist mit Mitnehmern, Zähnen und/oder Ausnehmungen versehen, die zu den Mitnehmern, Zähnen und/oder Ausnehmungen der mit einem Zahnkranz vergleichbaren Kranzeinrichtung 7 formmäßig passen, um Kräfte entsprechend einzuleiten.

Die Hilfsantriebsvorrichtung H umfasst eine Stellvorrichtung die dazu dient, das Ritzel 10 bzw. den Antriebskopf in den Wirkbereich der Zähne, Mitnehmer und/oder Ausnehmungen an der Kranzeinrichtung 7 der Felge 12 des Rades 13 ein- oder auszufahren. Die Stellvorrichtung ist derart gestaltet, dass durch die am Ritzel 10 angreifenden Reaktionskräfte der Eingriffszustand unterstützt wird.

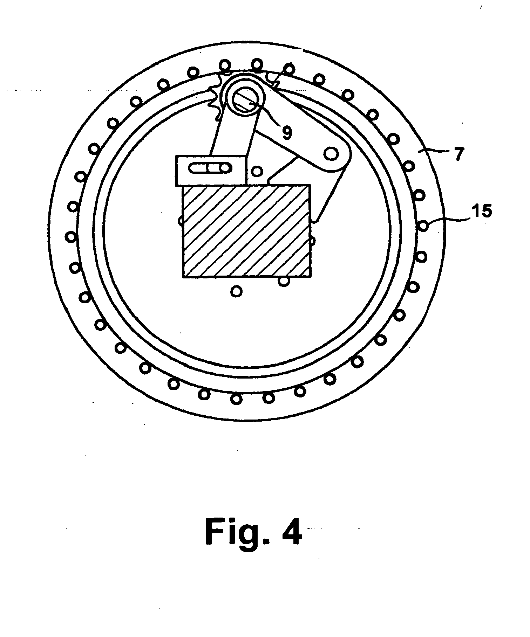

In Figur 4 ist stark vereinfacht der erfindungsgemäße Anfahrhilfsantrieb in einem Zustand gezeigt, in welchem über die Antriebswelle 9 eine Drehkraft in Kranzeinrichtung 7 und damit in die hier nicht näher dargestellte Felge des Hinterrades 4 eingetragen wird. In diesem Zustand kann dieses Hinterrad kurzzeitig als treibendes Rad betrieben werden.

Wie aus Figur 4 ersichtlich, erfolgt die Einkoppelung des Ritzels 10 in die Kranzeinrichtung 7 durch eine Stellvorrichtung 14. Bei diesem Ausführungsbeispiel wird die Antriebswelle 9 für den Antriebskopf 10 über ein Hebelsystem in den Wirkbereich der Mitnehmerstifte 15 eingeschwenkt. Diese Mitnehmerstifte sind entlang einer Kreisringlinie an der Felge des Rades 13 angeordnet. Bei dem erfindungsgemäßen Ausführungsbeispiel bestehen die Mitnehmer aus gleichen, zueinander beabstandeten Mitnehmerstiften 15, die entlang einer Kreislinie abfolgend an der Felge 12 (vgl. Fig. 3) befestigt sind. In diese Mitnehmer greifen passend geformte Zähne eines Zahnrades 10 ein.

Der in Figur 4 gezeigte Arbeitszustand, bei dem das Ritzel 10 mit den Mitnehmerstiften 15 kämmt wird nur so lange eingestellt, bis mit dem entsprechenden Gespann der Bereich unzureichender Traktion an den Hauptantriebsrädern der Zugmaschine durchfahren ist. Der kraftschlüssige Eingriff des als Antriebskopf fungierenden Ritzels 10 wird nur so lange eingestellt, bis die horizontale Bewegung über die Hauptantriebsachsen des Gespanns möglich ist und die Räder der Hauptantriebsachse A1 der Zugmaschine Z nicht mehr durchdrehen.

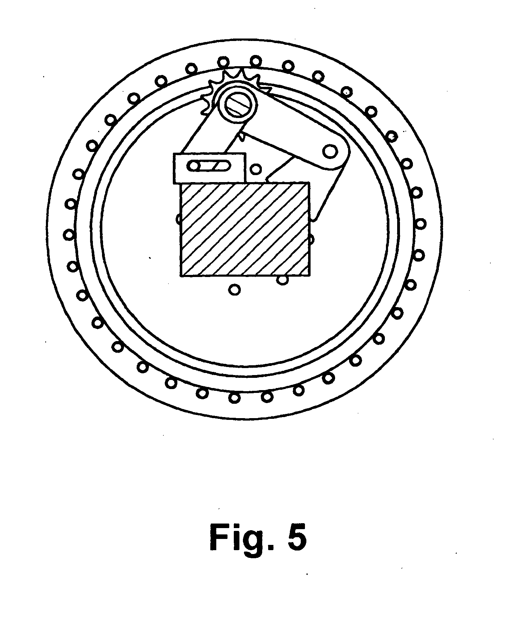

In Figur 5 ist der erfindungsgemäße Hilfsantrieb in einem Passivzustand dargestellt wie er für das Fahren mit ausreichender Traktion an der Hauptantriebsachse eingestellt wird. Bei Einstellung des Passivzustandes, also z.B. beim Fahren auf griffigem Untergrund und ausreichender Last an der Hauptantriebsachse nimmt das Ritzel 10 die in Figur 5 dargestellte Stellung ein. Das bedeutet, während des Fahrens ist das Ritzel 10 in Ruhe und zwischen dem Ritzel 10 und der Kranzeinrichtung 7 entsteht keinerlei Verschleiß.

Hier zeigt sich der große Vorteil der erfindungsgemäßen Vorrichtung. Würde man den Anhänger mit einem kardanischen Antrieb durch die Zugmaschine zu einem allradgetriebenen Fahrzeug umrüsten, so wäre dies mit erheblichen Umrüstungskosten verbunden. Zudem hat der Allradantrieb den Nachteil, dass diese zusätzlichen Antriebsteile der Räder ständig mit hoher Drehzahl mitlaufen und dies zu einem erheblichen Energieverlust führen würde. Außerdem bedeutet dies bei höheren Fahrgeschwindigkeiten einen erhöhten Verschleiß durch ständig drehende Antriebsteile. Das gleiche würde gelten, wenn man jedes Rad des Anhängers mit einem Nabenmotor versehen würde. Auch dies ergäbe einen unnötig hohen Energieaufwand und unnötig hohen Verschleiß, da diese Antriebsorgane ständig mitlaufen würden und dabei einem Verschleiß unterliegen. Zur normalen Fortbewegung des Fahrzeugs ist der Allradantrieb nicht nötig und kostet nur Energie und unterliegt erheblichem Verschleiß.

Da die erfindungsgemäße Anfahrhilfe nur für den kurzen Augenblick des Anfahrens in Problemsituationen betrieben wird, bedarf es nur eines geringen Aufwandes für die Lagerung der Antriebswelle 9 und für das Ritzel 10. Während des Anfahrens benötigt man nur kleine Drehgeschwindigkeiten des Antriebskopfes und dies ist mit einer einfachen, preisgünstigen Lagerung leicht zu erreichen.

Ein weiterer gewichtiger Vorteil der Erfindung liegt darin, dass diese unabhängig von der Marke der Zugmaschine oder des Anhängers auf einfache und preisgünstige Weise nachträglich nachgerüstet werden kann.

Aufgrund der einfachen Ausgestaltung der erfindungsgemäßen Vorrichtung kann auf eine teure Abkapselung vor Schmutz verzichtet werden. Es ist nur ein geringer Aufwand für Schmierung notwendig.

Die Antriebswelle 9 wird über einen Antrieb in Rotation versetzt, der bevorzugterweise ein Getriebe besitzt. Der Antrieb kann als Hydraulik-, Druckluft-, Elektro- oder Brennkraftmotor ausgeführt werden.

In einer bevorzugten erfindungsgemäßen Ausführungsform wird das Ein- und Ausfahren des als Antriebskopf fungierenden Ritzels 10 in die Mitnehmer und/oder Ausnehmungen der an der Felge des nicht angetriebenen Rades vorgesehenen Kranzeinrichtung 7 dadurch erreicht, dass die Drehrichtung des Antriebs, gewechselt wird. Bei der einen Drehrichtung des Antriebs fährt der Antriebskopf in den Wirkbereich der Mitnehmer ein und beim Wechsel der Drehrichtung fährt dieser aus dem Wirkbereich heraus.

Der Antrieb erhält seine Antriebsversorgung bevorzugterweise aus dem Energiekreislauf der Zugmaschine. Um den Installationsaufwand der erfindungsgemäßen Vorrichtung möglichst gering zu halten, ist der Antrieb vorzugsweise eine unabhängige Antriebseinrichtung. Prinzipiell könnte jedoch der Antrieb über eine lange kardanische Antriebswelle erfolgen, die über das Getriebe der Zugmaschine betätigt wird. Dies-würde jedoch zu einem deutlich höheren Installationsaufwand führen.

Die Übertragung der Drehkräfte vom Ritzel 10 zum Rad 4 kann über unterschiedliche an sich bekannte Komponenten erfolgen. Die Mitnehmer, Zähne und/oder Ausnehmungen, die ringförmig und kraftschlüssig an den entsprechenden Felgen befestigt sind, können beispielsweise ein Zahnkranz sein, der die Zähne nach innen oder nach außen trägt. Die Ausnehmungen bzw. Mitnehmer können auch aus runden oder eckigen Stäben bestehen, die parallel und in gleichem Abstand zueinander angeordnet sind. Bei dieser bevorzugten Ausführungsform besteht der Vorteil einer selbstreinigenden Wirkung, da die Mitnehmer oder Zähne des Antriebskopfes etwaige Verschmutzungen zwischen den einzelnen Stäben entfernen.

Das als Antriebskopf fungierende Ritzel 10 mit seinen Mitnehmern oder Ausnehmungen kann von der Innenseite des zahnkranzförmigen Ringes oder von der Außenseite auf den zahnkranzförmigen Ring eingreifen.

Das Einbringen und Entfernen des Ritzels 10 aus der Kranzeinrichtung 7 kann auch auf die Weise erfolgen, dass das Ritzel 10 in axialer Richtung der Antriebswelle 9 bewegt wird, um in den Wirkbereich der Kranzeinrichtung 7 zu gelangen.

Die Entfernung des Ritzels 10 aus dem Wirkbereich kann auch in der Form geschehen, dass eine Fliehkraftregelung in Aktion tritt, die bei höherer Drehgeschwindigkeit an der Antriebsachse 9 bzw. des Ritzels 10 automatisch ein Ausschwenken aus dem Wirkbereich veranlasst.

In einer bevorzugten Ausführungsform ist der Antriebskopf wie ein Zahnradritzel ausgebildet. In einer bevorzugten Ausführungsform sind wenigstens zwei Räder eines entsprechenden Aufliegers mit einer erfindungsgemäßen Antriebsvorrichtung ausgestattet. Die Krafteinleitung in die Antriebswelle 9 erfolgt dabei bevorzugterweise über einen Antrieb mit zwei oder mehreren Abgängen.

Die Befestigung der Kranzeinrichtung am Rad 4, 5 erfolgt bevorzugterweise über die entsprechende Felge 12. Die Krafteintragung in das Rad 4, 5 kann jedoch auch dadurch erfolgen, dass die Kranzeinrichtung an einer Scheibe oder Trommel befestigt sind, welche. mit der rotierenden Achse des Hinterrads gekoppelt ist.

In einer erfindungsgemäßen Ausführungsform mit Anhänger erfolgt die Aktivierung der Anfahrhilfe in der Weise, dass das während des Entleerungsvorgangs des Anhängers durch Schrägstellung der Ladefläche über den Hydraulikkreislauf der Zugmaschine der hydraulisch angetriebene Antrieb 5 aktiviert wird, nachdem über die Stellvorrichturig das Ritzel 10 in den Wirkbereich der Kranzeinrichtung 7 eingefahren wurde. Das , Einfahren der Stellvorrichtung kann elektrisch, hydraulisch oder auch von Hand erfolgen, wobei letzteres jedoch in geringerem Maße bevorzugt wird, da dazu der Fahrer aus der Maschine aussteigen müsste.

Nachdem der Anhänger bzw. der Auflieger die Traktionsprobleme überwunden hat, wird das Ritzel 10 aus dem Wirkbereich der am Rad 4, 5, insbesondere dessen Felge befestigten Kranzeinrichtung 7 ausgefahren. Während des normalen Fahrbetriebs bleibt die erfindungsgemäße Anfahrhilfe in Ruhe und es treten keinerlei Verschleißerscheinungen auf. Zudem führt die Anfahrhilfe zu keinerlei Energieverlusten, da sich während des normalen Fahrbetriebs keine Reibungskräfte oder drehenergetische Kräfte ergeben, die sich nachteilig auf den Kraftstoffverbrauch der Zugmaschine auswirken.

Ein weiterer Vorteil der erfindungsgemäßen Vorrichtung besteht darin, dass sich die Anfahrhilfe auf einfache Weise an die unterschiedlichsten Zugmaschinen, Lastkraftwagen oder Anhänger und Aufliegeranhänger anmontieren lässt. Dazu müssen keine wesentlichen Eingriffe in das Antriebssystem der Zugmaschine vorgenommen werden. In der Regel reicht eine einfache Abzweigung aus dem Hydrauliksystem der Zugmaschine sowie eine einfache elektrische Ansteuerung.

In einer bevorzugten Ausführungsvariante befinden sich der Antrieb 5 und die Stellvorrichtung 4 am Fahrgestell der Zugmaschine, des Anhängers oder Aufliegers oder am Mantel 8 der Achstraverse.

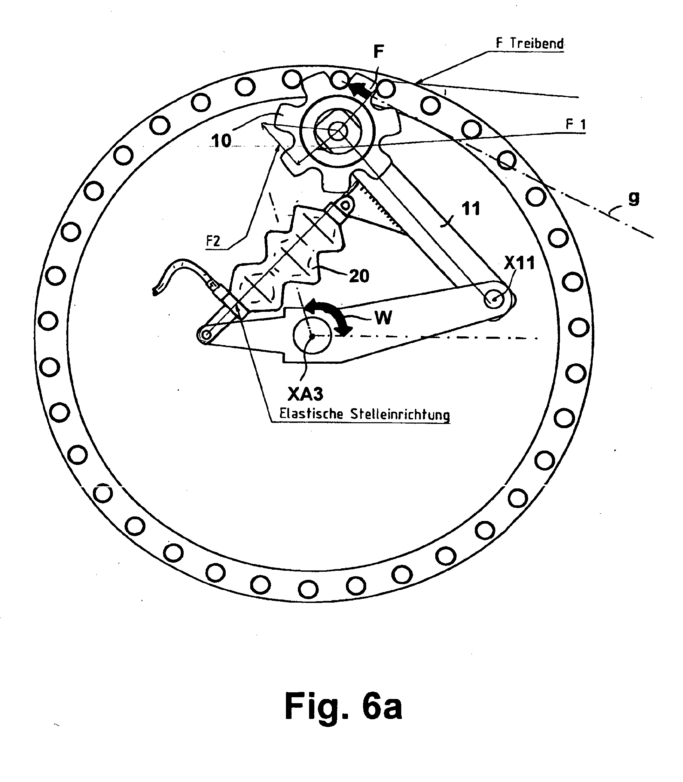

In Figur 6a ist eine zweite Ausführungsform von Komponenten des erfindungsgemäßen Anfahrhilfssystems gezeigt. Dieses Anfahrhilfssystem dient dem temporären Antrieb eines über ein Achssystem aufgehängten und nicht mit einem Fahrzeugantriebsstrang getrieblich gekoppelten Fahrzeugrades. Das Anfahrhilfssystem umfasst eine radseitig angebundene Kranzeinrichtung 7, einer achsseitig angebundenen Hilfsantriebseinrichtung die ein Ritzel 10 umfasst das mit der Kranzeinrichtung 7 in Eingriff bringbar ist, und eine Einrückeinrichtung zum temporären Einrücken des Ritzels 10 in die radseitig angebundene Kranzeinrichtung 7. Dieses Anfahrhilfssystem zeichnet sich dadurch aus, dass dieses eine Freilaufmechanik umfasst, die einen Freilaufzustand einnimmt, wenn die Kranzeinrichtung 7 schneller dreht als durch das Ritzel 10 veranlasst.

Bei dem gezeigten Ausführungsbeispiel ist die Freilaufmechanik im Zusammenspiel mit der Einrückeinrichtung gebildet, wobei zur Erlangung des Freilaufzustands das Ritzel 10 aus dem Eingriffszustand mit der Kranzeinrichtung 7 ausrückt. Die Einrückeinrichtung ist derart ausgebildet, dass unter Wirkung der seitens des Ritzels 10 in die Kranzeinrichtung 7 eingeleiteten Hilfsantriebskraft der Eingriffszustand unterstützt wird.

Die Einrückeinrichtung umfasst eine Lenkereinrichtung 11. Über diese Lenkereinrichtung 11 ist das Ritzel 2 derart gelagert, das dieses durch Schwenken der Lenkereinrichtung 11 mit der Kranzeinrichtung in bzw. außer Eingriff bringbar ist.

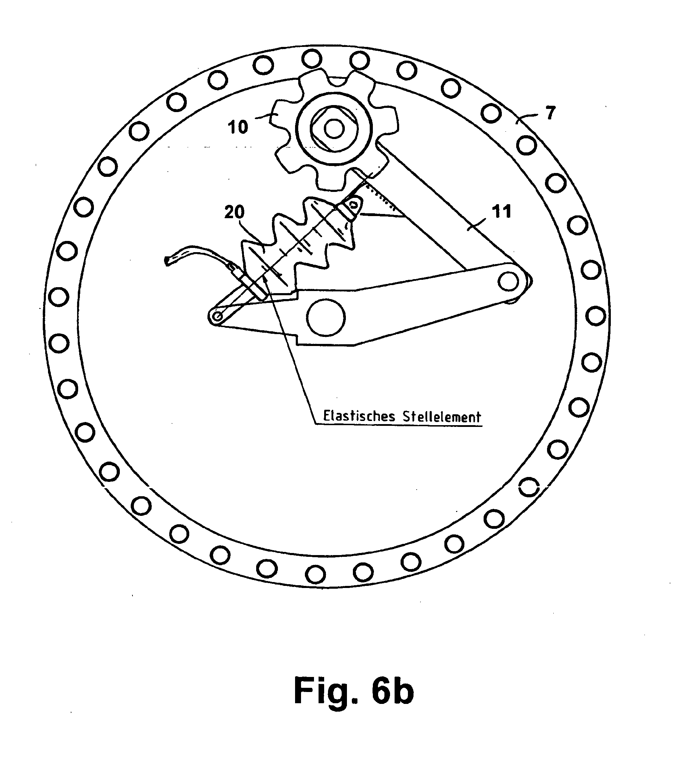

Die Lenkereinrichtung 11 ist mit einem Aktuator 20 gekoppelt und nach Maßgabe des Aktuators 20 in die Eingriffsposition oder eine Passivposition (siehe Fig. 6b) verlagerbar. Bei dem gezeigten Ausführungsbeispiel ist der Aktuator 20 derart ausgebildet, dass dieser die Lenkereinrichtung 11 elastisch nachgiebig unterstützt.

Die Einrückeinrichtung ist derart gestaltet, dass sich die Schwenkachse X11 der Lenkereinrichtung 11 und der Eingriffsbereich zwischen dem Ritzel 10 und der Kranzeinrichtung 7 in einem um die Radachse XA3 gemessenen Winkelsegment W mit einem Innenwinkel von weniger als 120° befinden. Die Wirkungslinie g der seitens des Ritzels 10 generierten Hilfskraft F läuft wie erkennbar derart an der Schwenkachse X11 vorbei, dass sich die Lenkereinrichtung 11 bei Einkoppelung der Hilfskraft F in die Kranzeinrichtung 7 aufstellt und sich damit zusätzlich zu der seitens des Aktuators 20 generierten Kraft in der Einrückstellung sichert.

Wird das die Kranzeinrichtung infolge einer von außen veranlassten Drehung des zugeordneten Rades schneller gedreht als durch das Ritzel veranlasst, so wird am Ritzel 10 ein Kräftesystem wirksam das die Lenkereinrichtung 11 aus der Einrückstellung herausdrängt und damit den Eingriffszustand des Ritzels 10 mit der Kranzeinrichtung 7 im wesentlichen aufhebt. Soweit der Aktuator 20 noch weiter aktiviert ist, drängt dieser das Ritzel nach jedem Überholen der Verzahnung der Kranzeinrichtung 7 zumindest teilweise wieder in die Kranzeinrichtung 7 zurück, so dass dann, wenn keine Eigendrehung des Rades stattfindet der Hilfsantrieb wieder wirksam wird. Wird das Ritzel 10 fortlaufend von der Kranzeinrichtung 7 überholt, so besteht kein bedarf nach einer Antriebskraftunterstützung und der Aktuator 20 kann deaktiviert werden und die Lenkereinrichtung 11 derart weit zurückziehen bis kein Berührungskontakt zwischen Ritzel 10 und Kranzeinrichtung 7 mehr besteht.

In Figur 6b ist das erfindungsgemäße System in einem Zustand dargestellt, in welchem der Eingriff zwischen dem Ritzel 10 und der Kranzeinrichtung 7 gerade aufgehoben ist. In diesem Zustand erfolgt keine weitere Antriebsunterstützung und das zugeordnete Rad fungiert nur noch als tragendes, nicht jedoch treibendes Fahrzeugrad. Durch entsprechende Ansteuerung des Aktuators 20 kann der Lenker 11 noch weiter in eine Passivstellung abgesenkt werden in welcher dieser bis zum nächsten Sondereinsatz verweilen kann. Aufgrund der relativ groben Eingriffsgeometrien von Ritzel 10 und Kranzeinrichtung 7 ist die Mechanik relativ unempfindlich gegen gebrauchstypische Verschmutzung.

Durch die Ausbildung des Aktuators 20 als elastisches Stellelement kann bei einem gemeinsamen Antrieb der auf einer Fahrzeugachse beidseitig sitzenden Räder eine Differentialwirkung realisiert werden dies es ermöglicht, dass das Fahrzeug auch entlang einer Kurvenbahn in Bewegung gesetzt werden kann, ohne dass an den Rädern entsprechnder Schlupf auftritt. Der Hilfsantrieb verursacht insoweit keine starre Synchronisation der Räder einer Achse, selbst dann wenn die entsprechend paarweise vorgesehenen Ritzel ohne Differentialwirkung miteinander drehstarr gekoppelt sind.

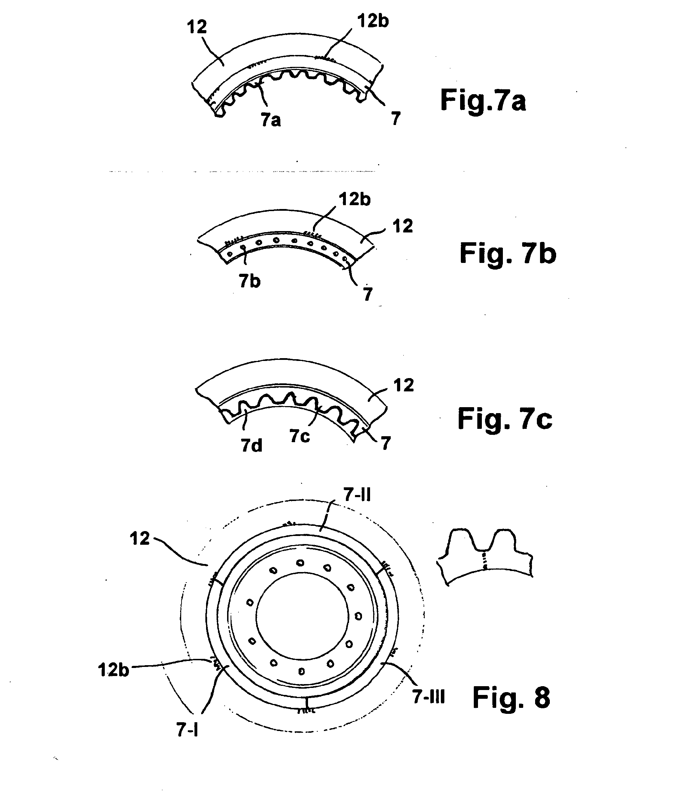

In den Figuren 7a, 7b, 7c sind weitere Varianten der felgenseitig angebundenen Kranzeinrichtung 7 dargestellt. Bei der Ausführungsform nach Figur 7a ist die Kranzeinrichtung 7 als flache Ringscheibe mit radial einwärts vorspringenden Zähnen 7a versehen. Diese Kranzeinrichtung kann als Schneidteil, insbesondere als Laserschneidteil gefertigt sein und über sukzessive abfolgende kurze Schweißnähte 12b an die Felge 12 angeschweißt sein. Für einen typischen Schwerlast-Lkw Auflieger beträgt die Blechdicke der Ringscheibe vorzugsweise wenigstens 18mm. Die Zähne können zumindest näherungsweise ein Evolventenprofil beschreiben. Die Zahnung ist vorzugsweise relativ grob, z.B. Modul 45.

In Figur 7b ist eine Variante der Kranzeinrichtung 7 dargestellt, bei welcher die Mitnehmergeometrie durch Mitnehmerstifte 7b bereitgestellt ist. Diese Mitnehmerstifte 7b können wiederum in einer Ringscheibe verankert sein die an die Felge 12 durch mehrere abfolgende Schweißnahtabschnitte 12b angeschweißt ist. Bei dieser Ausführungsform ist es möglich, wie insbesondere in Figur 3 gezeigt einen Deckring vorzusehen durch welchen die Mitnehmerstifte 7b weiter stabilisiert werden. Die Befestigung einer derartigen Kranzeinrichtung 7 an der zugeordneten Felge 12 kann auch durch Anschweißen des Deckringes, oder auch beider Ringe an der Felge erfolgen.

In Figur 7c ist eine Variante der Kranzeinrichtung 7 dargestellt, bei welcher die mit dem Ritzel in Eingriff tretenden Mitnehmergeometrien als Zahnvorsprünge 7c ausgebildet sind die sich axial über die Ringscheibe 7d erheben. Diese Zahnvorsprünge 7c können insbesondere als aufgeschweißte, warmgeformte, oder ggf. auch spanabhebend herausgearbeitete Strukturen gefertigt sein.

Letztlich ist es auch möglich, die Kranzeinrichtung 7 unmittelbar durch entsprechenden Umformung der Felge unmittelbar in diese einzuformen, oder bei geschweißter Bauart durch einen Fortsatz des Felgenhornringes oder der Felgentrommel zu fertigen. Alternativ zu der hier bevorzugten stofflichen Verbindung der Kranzeinrichtung mit der Felge ist es auch möglich, die Kranzeinrichtung anderweitig an der Felge zu befestigen, insbesondere zu verschrauben.

Wie in Figur 8 veranschaulicht, ist es möglich, die Kranzeinrichtung 7 aus mehreren Segmenten zu bilden, die partiell an die Felge 12 angeschweißt werden. Bei dem hier gezeigten Ausführungsbeispiel besteht die Kranzeinrichtung 7 aus drei Segmenten 7-I, 7-II und 7-III. die Schweißnähte 12b sind so positioniert, dass diese die Stoßstellen der Segmente überbrücken. Die Segmente sind weiterhin auch im Bereich ihrer Stoßstellen verschweißt. Die hier nicht näher dargestellte Verzahnungsgeometrie kann durch eine bahngesteuerte Schneideinrichtung auch nach dem Einschweißen der Segmente aus diesen herausgeschnitten werden. Bei diesem Ansatz ergibt sich unabhängig von den Einbautoleranzen beim Einschweißen der Segmente eine hohe Rundlauf- und Verzahnungspräzision der Kranzeinrichtung 7.

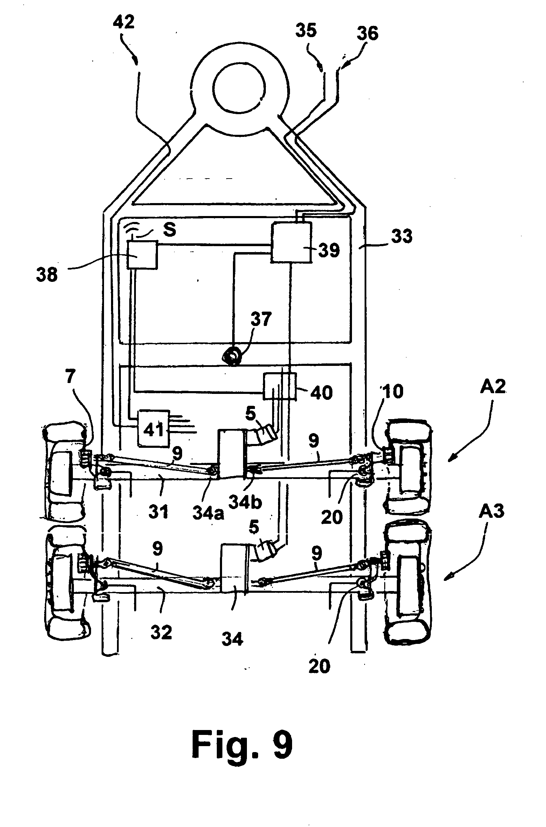

In Figur 9 ist stark vereinfacht der Unterbau eines erfindungsgemäß mit einem Anfahrhilfssystem ausgestatteten Aufliegers für ein Sattelzugfahrzeug dargestellt. Der Auflieger umfasst zwei Achsen A2, A3, die abgesehen von den hier beschriebenen für jede Achse vorgesehenen Hilfsantrieb nicht weiter mit dem seitens des Zugfahrzeuges bereitgestellten Antriebsstrang gekoppelt sind. Jede Achse A2, A3 umfasst eine Achstraverse 31, 32, die über eine nicht näher dargestellte Aufhängungseinrichtung gefedert mit dem Aufliegerrahmen 33 gekoppelt ist.

Im Mittenbereich jeder Achstraverse 31, 32 ist ein Getriebemotor 34 vorgesehen. Die Getriebemotore 34 umfassen jeweils einen ölhydraulischen Antrieb 5. Die Getriebemotore 34 sind beidseitig mit Abtriebsausgängen 34a, 34b versehen die hier aus Kostengründen drehstarr gekoppelt sind und keine Differentialwirkung bieten. An diese Abtriebsausgänge 34a, 34b ist jeweils eine Antriebswelle 9 angebunden. Über diese Antriebswellen 9 werden wie in der vorangegangenen Beschreibung ausgeführt Ritzel 10 betrieben die über einen Einrückmechanismus mit radseitig vorgesehenen Kranzeinrichtungen 7 in Eingriff bringbar sind, wobei dieser Einrückmechanismus eine Freilauffunktion bietet. Die Antriebswellen 9 sind als Gelenkwellen ausgeführt und mit einem Längenausgleich versehen.

Die Energieversorgung der Antriebe 5 erfolgt über das Hydrauliksystem des Aufliegers. Das Hydrauliksystem umfasst eine Druckleitung 35 und eine Rücklaufleitung 36. Bei dem hier gezeigten Ausführungsbeispiel wird über das Hydrauliksystem primär ein Kippzylinder 37 zum Kippen einer hier nicht dargestellten Schüttgutwanne (vgl. Fig. 2 Bezugszeichen 1) betrieben. Für den Betrieb des Aufliegers in dem Sonderbetriebsmodus mit Anfahrhilfsfunktion ist eine elektronische Steuereinrichtung 38 vorgesehen über welche eine Abzweigventileinrichtung 39 in einen Betriebszustand gebracht wird, in welchem eine Druckölversorgung der Hilfsantriebseinrichtung ermöglicht wird. Nach Maßgabe des Schaltzustands der Abzweigventileinrichtung 39 wird der Druckölkreis zu einer Steuerventileinrichtung 40 geöffnet. Die Steuerventileinrichtung 40 wird ebenfalls über die elektronische Steuereinrichtung 38 angesteuert. Über die Steuerventileinrichtung 40 wird die Druckölzufuhr zu den Antrieben 5 eingestellt. Sobald die Antriebe 5 mit Drucköl beaufschlagt werden, werden die Ritzel 10 in Rotation versetzt. Zum Einrücken der Ritzel 10 in die zugeordnete Kranzeinrichtung ist für jedes Rad eine Aktuatoreinrichtung 20 vorgesehen durch welche das jeweilige Ritzel 10 elastisch unterstützt in den Wirkbereich der Kranzeinrichtung 7 gedrängt werden kann.

Die Ansteuerung der Aktuatoreinrichtungen 20 erfolgt ebenfalls nach Maßgabe der elektronischen Steuereinrichtung 38. Bei dem hier gezeigten Ausführungsbeispiel erfolgt die Ansteuerung der Aktuatoreinrichtungen 20 über das Druckluftsystem des Aufliegers. Hierzu ist eine Abzweigventileinrichtung 41 vorgesehen durch welche die Druckluftbeaufschlagung der Aktuatoreinrichtungen 20 veranlasst werden kann. Die Druckluftzufuhr erfolgt über eine Druckluftleitung 42 die auch Teil des Bremssystems bilden kann. Die zur Ansteuerung der Aktuatoreinrichtungen 20 vorgesehene Abzweigventileinrichtung 41 wird ebenfalls über die elektronische Steuereinrichtung 38 angesteuert.

Bei dem hier gezeigten Ausführungsbeispiel ist die Steuereinrichtung 38 mit einer Schnittstelleneinrichtung S versehen über welche eine Kommunikation mit einem im Bereich der Fahrerumgebung der Zugmaschine vorgesehenen Bedieneinrichtung abgewickelt wird. Diese Schnittstelleneinrichtung S kann als WLAN-Schnittstelle ausgeführt sein, so dass die Kommunikation mit der Bedieneinrichtung drahtlos erfolgen kann.

Die Steuereinrichtung 38 ist vorzugsweise derart schaltungstechnisch aufgebaut und konfiguriert, dass durch diese besondere Steuereigenschaften bereitgestellt werden. So kann die Steuereinrichtung 38 so ausgeführt sein, dass die Antriebe 5 erst mit einem bestimmten Druckniveau beaufschlagt werden können, wenn die Bremsen des Aufliegers hinreichend gelöst sind. Weiterhin kann vorgesehen sein, dass die Antriebe 5 erst aktiv werden können, wenn ein bestimmter Einrückzustand der Ritzel 10, bzw. ein bestimmtes Hubniveau der Aktuatoreinrichtungen 20 erreicht wird. Die Aktautoreinrichtungen 20 können vorzugsweise nur angesteuert werden, wenn die momentanen Drehzahlen der Räder unter einem festgelegten Schwellwert liegen. Wird dieser Schwellwert bei eingerückten Ritzeln 10 überschritten, so werden die Aktuatoren 20 derart angesteuert, dass diese die Ritzel 10 ausrücken bevor diese durch die Zahnkranzreaktionskräfte entgegen der Stellkraft der jeweiligen Aktuatoreinrichtung 20 zwangsweise ausgerückt werden. Die Drehzahlen der Räder können insbesondere durch Signale bestimmt werden, die über etwaige ABS-Sensoren erhoben werden. Für die Aktivierung des Hilfsantriebssystems kann weiter vorgesehen sein, dass diese nur möglich ist, wenn an der Zugmaschine ein niedriger Gang eingelegt ist, oder eine Leerlaufstellung eingeschaltet ist und keine Bremsbetätigung erfolgt.

Es ist möglich, in der Steuereinrichtung bestimmte Betriebsprogramme zu hinterlegen, die auf bestimmte Einsatzfälle abgestimmt sind. So ist in der Steuereinrichtung 38 vorzugsweise ein Schüttgutablademodus hinterlegt der dazu führt, dass während des Aufkippens der Schüttgutwanne ein bestimmter Vortrieb des Aufliegers einritt, ohne dass hierzu über die Zugmaschine Vortrieb generiert werden muss. Die für diesen Modus optimalen Einstellungen sind vorzugsweise als Nutzerprogramm in der Steuereinrichtung 38 hinterlegt.

Die Steuereinrichtung 38 ist vorzugsweise derart ausgelegt, dass diese etwaige Einsätze des Hilfsantriebssystems dokumentiert. Vorzugsweise werden insbesondere die Einsatzzeit und die Einsatzdauer und ggf. die Einsatzbelastung dokumentiert. Anhand dieser Informationen kann durch Auslesen der Steuereinrichtung 38 festgestellt werden, ob das Anfahrhilfssystem über einen gewährleistungsrelevanten Umfang hinaus genutzt wurde.

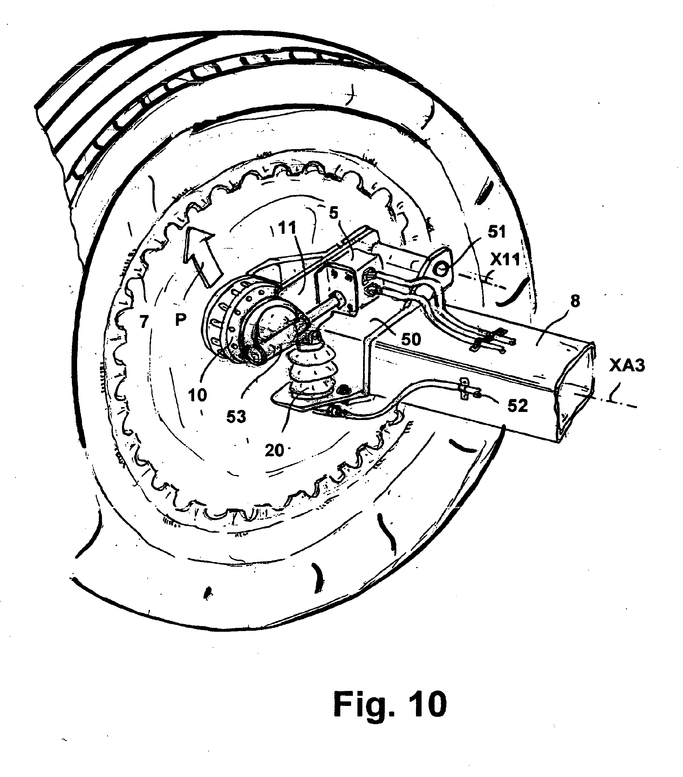

In Figur 10 ist eine weitere Variante der radnahen Komponenten eines erfindungsgemäßen Anfahrhilfsantriebs dargestellt. Dieser Anfahrhilfsantrieb umfasst eine Basisplatte 50 die auf eine Achstraverse 8 aufsetzbar ist. Die Basisplatte 50 trägt eine Gelenkeinrichtung 51 an welcher die Lenkereinrichtung 11 angelenkt ist. Die durch die Gelenkeinrichtung 51 definierte Lenkerschwenkachse X11 erstreckt sich in vertikaler Richtung oberhalb der Radachse XA3. An der Lenkereinrichtung 11 ist über eine hier nicht weiter dargestellte Lagereinrichtung das Ritzel 10 drehbewegbar gelagert. Das Ritzel 10 ist als Stiftkranzritzel ausgebildet. Das Ritzel 10 ist durch Aufwärtsschwenken in Richtung des Pfeilsymbols P in eine Eingriffsposition bringbar, in welcher dieses mit der Kranzeinrichtung 7 kämmt. Die Kranzeinrichtung 7 bildet einen Kranz von radial einwärts zur Radachse XA3 hin gerichteten Zähnen. Die Herbeiführung des Einrückzustandes zwischen Ritzel 10 und Kranzeinrichtung 7 erfolgt durch radiale Verlagerung des Ritzels 10 nach außen entlang einer Bogenbahn um die Lenkerachse X11. Die Position der Eingriffsstelle zwischen Ritzel 10 und Kranzeinrichtung 7 ist so gewählt. dass infolge der am Ritzel 10 angreifenden Reaktionskräfte das Ritzel in Eingriffsposition gedrängt, d.h. die Lenkereinrichtung 11 in Richtung des Pfeilsymbols P belastet ist.

Das Einrücken des Ritzels 10 in die Eingriffsposition erfolgt durch die Aktuatoreinrichtung 20. Die Aktuatoreinrichtung 20 ist mit der Lenkereinrichtung 11 kinematisch gekoppelt und derart gestaltet, dass die Lenkereinrichtung 11 elastisch abgestützt ist. Die Systemelastizität ist derart abgestimmt, dass bei entsprechenden, am Ritzel 10 angreifenden Reaktionskräften dieses entgegen der Pfeilrichtung P aus seiner Eingriffsposition herausgedrängt werden kann und dabei einer Überholen der Kranzeinrichtung 7 ermöglicht, wenn dies durch anderweitige, am rad angreifende Kräfte veranlasst ist.

Die Aktuatoreinrichtung 20 wird bei diesem Ausführungsbeispiel über eine Druckluftleitung 52 angesteuert. Der Antrieb des Ritzels 10 erfolgt über eine Getriebeeinrichtung 53 und einen Ölmotor 54. Der Ölmotor 54 und die Getriebeeinrichtung 53 sind direkt an die Lenkereinrichtung angebunden und gemeinsam mit dieser verlagerbar. Die Getriebeeinrichtung ist bei diesem Ausführungsbeispiel als Schneckengetriebe gestaltet. Dieses Getriebe kann beispielsweise eine Übersetzung von 1:30 in einer Stufe realisieren. Der Eingrifssbereich der Schnecke des Schneckengetriebes in das zugeordnete Großrad erfolgt auf einer der Eingriffsseite des Ritzels 10 in die Kranzeinrichtung 7 abgewandten Seite. Das Ritzel 10 und die Kranzeinrichtung 7sind so gestaltet, dass diese ein Übersetzungsverhältnis von 1:5 schaffen. Mit dieser Anordnung kann in ein LkW Rad ein Antriebshilfsmoment von etwa 25 kNm problemlos eingekoppelt werden. Die Basisplatte ist als Winkelstruktur ausgeführt und wird durch die an der Gelenkeinrichtung 51 angreifenden Kräfte im wesentlichen auf die Achstraverse 8 gedrängt.

Über die Basisplatte 50 kann ein Klemmmontagesystem realisiert werden, das einen nachträglichen Anbau der Antriebshilfseinrichtung an das entsprechende Achssystem ermöglicht, ohne dass an diesem besondere, insbesondere nur bedingt reversible Modifikationen erforderlich sind.

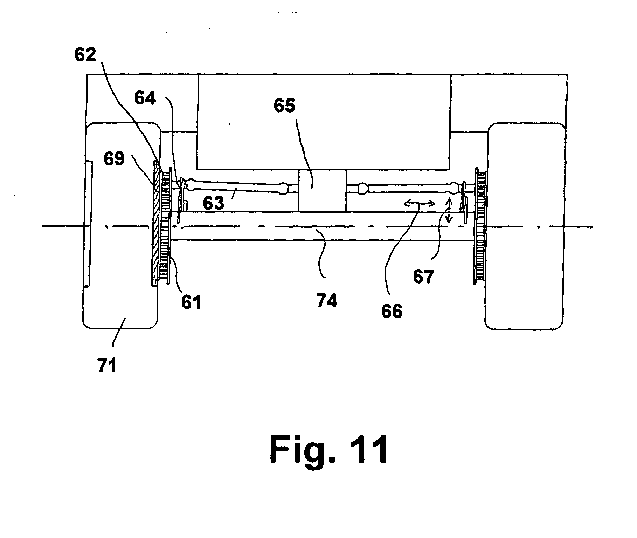

Wie in Figur 11 weiter veranschaulich besteht das Prinzip der Erfindung darin, dass als Anfahrhilfe zur die Zugmaschine, den Anhänger oder den Aufliegeranhänger an mindestens einem nicht angetriebenen Rad 71 bezüglich seiner Drehachse ein auf mindestens einer konzentrischen Kreislinie liegender Mitnehmer und/oder Ausnehmung kraftschlüssig befestigt sind und dass am Fahrgestell oder an der Achse mindestens eine Antriebsachse 63 angeordnet ist, mit einem Antriebskopf 62, der an seiner Umfangslinie passende Gegenstücke für die Mitnehmer und/oder Ausnehmungen am Hinterrad aufweist, um durch Rotation Kräfte in die Mitnehmer und/oder Ausnehmungen des Hinterrads 71 einzutragen und dass der Antriebskopf 62 in den Wirkbereich der Mitnehmer und/oder Ausnehmungen 62 des Hinterrades ein- und ausgefahren werden kann. Dazu wird bevorzugt an der Felge 69 des nicht angetriebenen Rades 61 ein ringförmiges Element angeordnet, welches im wesentlichen mit einem Zahnkranz zu vergleichen ist. Dieses ringförmige Element ist kraftschlüssig mit der Felge 69 verbunden und dieser bevorzugterweise bezüglich der Drehachse 74 des Rades 71 konzentrische Ring enthält Ausnehmungen oder zahnähnliche Elemente oder Mitnehmer. In unmittelbarer Nähe dieses Ringes befindet sich eine Antriebsachse 63. an deren Ende ein Antriebskopf 62 kraftschlüssig befestigt ist. Dieser Antriebskopf 62 ist mit Mitnehmen, Zähnen und/oder Ausnehmungen versehen, die zu den Mitnehmern, Zähnen und/oder Ausnehmungen des mit einem Zahnkranz vergleichbaren Ringes an der Felge 69 des Rades 71 formmäßig passen, um Kräfte einzuleiten. Zusätzlich ist direkt oder mittelbar am Antriebskopf 62 eine Stellvorrichtung angeordnet, mit der es möglich ist, den Antriebskopf 62 in den Wirkbereich der Zähne, Mitnehmer und/oder Ausnehmungen an der Feige 69 des Rades 71 ein- oder auszufahren.

## Patentansprüche

1. Anfahrhilfssystem zum temporären Antreibens eines über ein Achssystem aufgehängten und nicht mit einem Fahrzeugantriebsstrang getrieblich gekoppelten Fahrzeugrades, mit:
- einer radseitig angebundenen Kranzeinrichtung (7),
- einer achsseitig angebundenen Hilfsantriebseinrichtung die ein Ritzel (10) umfasst das mit der Kranzeinrichtung (7) in Eingriff bringbar ist, und
- einer Einrückeinrichtung zum temporären Einrücken des Ritzels (10) in die radseitig angebundene Kranzeinrichtung (7),
- wobei zur Erlangung des Freilaufzustands das Ritzel (10), aus dem Eingriffszustand mit der Kranzeilnrichtung (7) ausrückt, und
- unter Wirkung der seitens des Antriebeselementes in die Kranzeinrichtung (7) eingeleiteten Hilfsantriebskraft der Eingriffszustand unterstützt wird,
**dadurch gekennzeichnet, dass** das Anfahrhilfssystem eine Freilaufmechanik umfasst, die einen Freilaufzustand einnimmt, wenn die Kranzeinrichtung (7) schneller dreht als durch das Ritzel (10) veranlasst.

2. Anfahrhilfssystem nach Anspruch 1, **dadurch gekennzeichnet, dass** die Freilaufmechanik im Zusammenspiel mit der Einrückeinrichtung gebildet ist und hierbei die Freilaufmechanik durch die Einrückeinrichtung die Kranzeinrichtung (7) und das Ritzel (10) gebildet ist.

3. Anfahrhilfssystem nach Anspruch 1 oder 2, **dadurch gekennzeichnet, dass** die Einrückeinrichtung eine Lenkereinrichtung (11) umfasst, und dass über diese Lenkereinrichtung (11) das Ritzel (10) derart gelagert ist, das diese durch Schwenken der Lenkereinrichtung (11) mit der Kranzeinrichtung (7) in Eingriff bringbar ist.

4. Anfahrhilfssystem nach wenigstens einem der Ansprüche 1 bis 3, **dadurch gekennzeichnet**, 8. Anfahrhilfssystem nach wenigstens einem der Ansprüche 1 bis 7, **dadurch gekennzeichnet, dass** die Lenkereinrichtung (11) mit einem Aktuator (20) gekoppelt ist und nach Maßgabe des Aktuators (20) in die Eingriffsposition oder eine Passivposition verlagerbar ist.

5. Anfahrhilfssystem nach wenigstens einem der Ansprüche 1 bis 4, **dadurch gekennzeichnet, dass** der Aktuator (20) die Lenkereinrichtung (11) elastisch nachgiebig unterstützt.

6. Anfahrhilfssystem nach wenigstens einem der Ansprüche 1 bis 5, **dadurch gekennzeichnet, dass** die Kranzeinrichtung (7) als Zahnkranz mit radial einwärts ausgerichteten Zähnen ausgebildet ist.

7. Anfahrhilfssystem nach wenigstens einem der Ansprüche 1 bis 6, **dadurch gekennzeichnet, dass** die Kranzeinrichtung (7) als Stiftkranz ausgebildet ist

8. Anfahrhilfssystem nach wenigstens einem der Ansprüche 1 bis 7, **dadurch gekennzeichnet, dass** eine elektronische Steuereinrichtung vorgesehen ist zur Ansteuerung des Anfahrhilfssystems.

9. Anfahrhilfssystem nach wenigstens einem der Ansprüche 1 bis 8, **dadurch gekennzeichnet, dass** eine Sensoreinrichtung vorgesehen ist zur Erfassung hinsichtlich der Raddrehung indikativer Signale, und dass diese Signale durch die elektronische Steuereinrichtung verarbeitet werden, und dass das Hilfsdrehmoment in Abhängigkeit von der erfassten Raddrehung abgestimmt wird.

10. Anfahrhilfssystem nach wenigstens einem der Ansprüche 1 bis 9, **dadurch gekennzeichnet, dass** das Hilfsdrehmoment durch einen Hydraulikmotor generiert wird, und dass das Hilfsdrehmoment durch Abstimmung des Fluiddruckes, und/oder des Fluidstroms abgestimmt wird.

11. Anfahrhilfssystem nach wenigstens einem der Ansprüche 1 bis 10, **dadurch gekennzeichnet, dass** die elektronische Steuereinrichtung eine Aufzeichnungseinrichtung umfasst zur Aufzeichnung hinsichtlich des Einsatzes des Hilfsantriebssystems indikativen Informationen.

12. Auflieger für ein Sattelschleppfahrzeug mit einem Radaufhängungssystem das wenigstens eine Radachse umfasst die in einem hinteren Bereich des Sattelschleppfahrzeuges angeordnet ist, wobei die Radachse einen Achsträger umfasst der sich Quer zur Längsrichtung des Aufliegers erstreckt und beidseitig gefedert abgestützt ist, wobei der Achsträger im Bereich seiner beiden Enden jeweils eine Radlagerung trägt auf welcher jeweils eine Radfelge sitzt, wobei jene Radfelge (12) mit einer Kranzeinrichtung (7) versehen ist und wobei an den Achsträger eine Hilfsantriebseinrichtung angebunden ist die schaltbar mit einer Kranzeinrichtung (7) in Eingriff bringbar ist, und wobei die Hilfsantriebseinrichtung eine Freilaufmechanik umfasst, und zur Erlangung eines Freilaufzustands ein Ritzel (10) aus dem Eingriffszustand mit der Kranzeinrichtung (7) ausrückt, und unter Wirkung der seitens des Ritzels in die Kranzeinrichtung eingeleiteten Hilfsantriebskraft der Eingriffszustand unterstützt wird, **dadurch gekennzeichnet daß** die Freilaufmechanik einen Freilaufzustand einnimmt, wenn die Kranzeinrichtung (7) schneller dreht als durch das Ritzel (10) veranlasst.

13. Auflieger nach Anspruch 12, **dadurch gekennzeichnet, dass** die Hilfsantriebseinrichtung einen Lenker umfasst der schwenkbewegbar gelagert ist, und dass dieser Lenker eine Ritzellagerung trägt, und dass durch Schwenken des Lenkers das Ritzel (10) in eine Eingriffsposition schwenkbar ist in welcher das Ritzel (10) mit der Kranzeinrichtung (7) in Eingriff steht und der Eingriffszustand unter Wirkung der Ritzelreaktionskräfte unterstützt wird.

## Claims

1. Starting aid system for temporarily driving a vehicle wheel suspended by an axial system and not coupled by gearing with a vehicle drivetrain, with:
- a rim device (7) attached to the wheel
- an auxiliary drive device attached to the axle, which includes a pinion (10) that can be made to mesh with the rim device (7), and
- an indenting device for temporarily indenting the pinion (10) into the rim device (7) attached to the wheel
- in which for obtaining the release state the pinion (10) disengages out of the mesh with the rim device (7), and
- under effect of the auxiliary driving force introduced by the driving element into the rim device (7) the mesh is supported,
**characterised in that** the starting aid system includes a free-wheel mechanism that goes into a free-wheel state when the rim device (7) rotates faster than induced by the pinion (10).

2. Starting aid system according to claim 1, **characterised in that** the free-wheel mechanism is formed in interaction with the indenting device and the free-wheel mechanism is formed by the indenting device, the rim device (7) and the pinion (10).

3. Starting aid system according to claim 1 or 2, **characterised by** that the indenting device includes a steering wheel device (11), and that by means of this steering wheel device (11) the pinion (10) is mounted in such a way that by swinging the steering wheel device (11) the indenting device can be made to mesh with the rim device (7).

4. Starting aid system according to at least one of claims 1 to 3, **characterised by** in that the steering wheel device (11) is coupled with an actuator (20) and according to the actuator (20) can be moved into the engagement position or into a passive position.

5. Starting aid system according to at least one of claims 1 to 4, **characterised in that** the actuator (20) flexibly supports the steering wheel device (11).

6. Starting aid system according to at least one of claims 1 to 5, **characterised in that** the rim device (7) is formed as a ring gear with teeth orientated radially inwards.

7. Starting aid system according to at least one of claims 1 to 6, **characterised in that** the rim device (7) is formed as a peg crown.

8. Starting aid system after at least one of the claims 1 to 7, **characterised by** the fact that an electronic control device is provided for activating the starting aid system.

9. Starting aid system according to at least one of claims 1 to 8, **characterised in that** a sensor device is provided for detecting indicative signals as to the wheel rotation, and that these signals are processed by the electronic control device, and that the auxiliary torque is set depending on the detected wheel rotation.

10. Starting aid system according to at least one of claims 1 to 9, **characterised in that** the auxiliary torque is generated by a hydraulic engine, and that the auxiliary torque is set by setting the fluid pressure and/or of the fluid flow.

11. Starting aid system according to at least one of claims 1 to 10, **characterised in that** the electronic control device includes a recording device for recording information indicative for the use of the auxiliary drive system.

12. Trailer for a semitrailer with a wheel suspension system that includes at least one axis that is arranged in a rear area of the semitrailer vehicle, wherein the axis includes a crossmember that extends orthogonally to the longitudinal direction of the trailer, and is on both sides supported by springs, in which the axial carrier carries, in the area of its both ends, each time a wheel bearing, on each of which a wheel rim is situated, every wheel rim (12) being provided with a rim device (7),
and in which an auxiliary drive device is connected to the crossmember, which can be made to mesh by switching with a rim device (7), and wherein the auxiliary drive device includes a free-wheel mechanism, and for obtaining a free-wheel state a pinion (10) disengages out of the mesh with the rim device (7), and under effect of the auxiliary driving force introduced by the pinion into the rim device the engagement state is supported, **characterised in that** the free-wheel mechanism goes into a free-wheel state when the rim device (7) rotates faster than induced by the pinion (10)

13. Trailer according to claim 12, **characterised in that** the auxiliary drive device includes a steering wheel that is mounted pivotally, and that this steering wheel carries a pinion bearing, and that by swinging the steering wheel the pinion (10) is tiltable into an engaging position in which the pinion (10) meshes with the rim device (7), and the mesh is supported under effect of the reaction forces of the pinion.

## Revendications

1. Système d'aide au démarrage pour la propulsion temporaire d'une roue de véhicule suspendue par un système d'axe et non pas reliée par engrenage avec un train de transmission du véhicule, avec:
- un dispositif de couronne attaché côté roue (7)
- un dispositif de commande auxiliaire attaché côté axe, qui comprend un pignon (10), qui peut être porté en engrènement avec le dispositif de couronne (7), et
- un dispositif d'engagement pour insérer temporairement le pignon (10) dans le dispositif de couronne attaché côté roue (7)
- où pour obtenir l'état libre le pignon (10) désengage de l'état d'engagement avec le dispositif de couronne (7), et
- sous effet de la force de propulsion auxiliaire introduite dans le dispositif de couronne (7) par l'élément d'entraînement l'état d'engagement est soutenu,
**caractérisé en ce que** le système d'aide au démarrage comprend une mécanique à roue libre, qui occupe un état à roue libre quand le dispositif de couronne (7) tourne de manière plus rapide qu'induit par le pignon (10).

2. Système d'aide au démarrage selon revendication 1, **caractérisé en ce que** la mécanique à roue libre est formée en coopération avec le dispositif d'engagement et que la mécanique à roue libre est formée par le dispositif d'engagement, le dispositif de couronne (7) et le pignon (10).

3. Système d'aide au démarrage selon la revendication 1 ou 2, **caractérisé en ce que** le dispositif d'engagement comprend un dispositif de volant (11), et que par ce dispositif de volant (11) le pignon (10) est appuyé tellement qu'en faisant pivoter le dispositif de volant (11) il peut être porté en engrènement avec le dispositif de couronne (7).

4. Système d'aide au démarrage selon au moins une des revendications 1 jusqu'à 3, **caractérisé en ce que**, le dispositif de volant (11 est couplé avec un actionneur (20) et qu'il est déplaçable selon l'actionneur (20) dans la position d'engagement ou dans une position passive.

5. Système d'aide au démarrage selon au moins une des revendications 1 jusqu'à 4, **caractérisé en ce que** l'actionneur (20) soutient le dispositif de volant (11) de façon élastique.

6. Système d'aide au démarrage selon au moins une des revendications 1 jusqu'à 5, **caractérisé en ce que** le dispositif de couronne (7) est formé comme couronne dentée avec les dents orientées radialement vers l'intérieur.

7. Système d'aide au démarrage selon au moins une des revendications 1 jusqu'à 6, **caractérisé en ce que** le dispositif de couronne (7) est conformé comme une couronne à pointes.

8. Système d'aide au démarrage après au moins un les revendications 1 jusqu'à 7, **caractérisé en ce qu'**un dispositif de commande électronique est prévu pour le pilotage du système d'aide au démarrage.

9. Système d'aide au démarrage selon au moins une des revendications 1 jusqu'à 8, **caractérisé en ce qu'**un dispositif senseur est prévu pour la détection de signaux indicatifs pour la rotation de la roue, et que ces signaux sont traités par le dispositif de commande électronique, et que la couple auxiliaire est syntonisée en fonction de la rotation de la roue relevée.

10. Système d'aide au démarrage selon au moins une des revendications 1 jusqu'à 9, **caractérisé en ce que** la couple auxiliaire est générée par un moteur hydraulique, et que la couple auxiliaire est syntonisée moyennant la syntonisation de la pression du fluide et/ou du courant de fluide.

11. Système d'aide au démarrage selon au moins une des revendications 1 jusqu'à 10, **caractérisé en ce que** le dispositif de commande électronique comprend un dispositif d'enregistrement pour l'enregistrement d'informations indicatives sur l'usage du système de propulsion auxiliaire.

12. Semi-remorque pour un tracteur de semi-remorque avec un système de suspension qui comprend au moins un essieu qui est arrangé dans une zone postérieure du tracteur de semi-remorque, l'essieu comprenant un support d'essieu qui s'étend transversalement à la direction longitudinale du semi-remorque et est amortisé des deux côtés, le support d'essieu portant dans la zone de ses deux extrémités chaque fois un palier de roue, sur chacun desquels est monté une jante, chaque jante (12) étant pourvue d'un dispositif de couronne (7),
et où au support d'essieu un dispositif de propulsion auxiliaire est attaché, qui par commutation peut engréner avec un dispositif de couronne (7), et où le dispositif de propulsion auxiliaire comprend une mécanique à roue libre, et pour obtenir un état à roue libre un pignon (10) désengage de l'état d'engagement avec le dispositif de couronne (7), et sous l'effet de la force de propulsion auxiliaire introduite dans le dispositif de couronne par le pignon l'état d'engrènement est soutenu, **caractérisé en ce que** la mécanique à roue libre occupe un état à roue libre quand le dispositif de couronne (7) tourne plus rapidement qu'induit par le pignon (10).

13. Semi-remorque selon la revendication 12, **caractérisé en ce, que** le dispositif de propulsion auxiliaire comprend un volant, qui est appuyé de manière pivotante, et que ce volant porte un palier de pignon, et qu'en faisant pivoter le volant le pignon (10) peut pivoter dans une position d'engrènement dans laquelle le pignon (10) est en engrènement avec le dispositif de couronne (7) et l'état d'engagement est soutenu sous l'effet des forces de réaction du pignon.
